Europäisches Patentamt

European Patent Office

Office européen des brevets

(19)

(11) Numéro de publication: **0 058 438**
**A2**

(12) **DEMANDE DE BREVET EUROPEEN**

(21) Numéro de dépôt: **82200047.7**

(22) Date de dépôt: **15.01.82**

(51) Int. Cl.³: **B 62 M 3/08**

(30) Priorité: **13.02.81 FR 8103039**
**08.07.81 FR 8113811**

(43) Date de publication de la demande:
**25.08.82 Bulletin 82/34**

(84) Etats contractants désignés:
**AT BE CH DE FR GB IT LI LU NL SE**

(71) Demandeur: **Badersbach, Jean**
**Castellou**
**F-46100 Figeac(FR)**

(71) Demandeur: **Drugeon, Jean-François**
**1bis Rue Maleville**
**F-46100 Figeac(FR)**

(72) Inventeur: **Badersbach, Jean**
**Castellou**
**F-46100 Figeac(FR)**

(72) Inventeur: **Drugeon, Jean-François**
**1bis Rue Maleville**
**F-46100 Figeac(FR)**

(74) Mandataire: **Barre, Philippe**
**Cabinet Barre, Gatti, Laforgue 95, rue des Amidonniers**
**F-31069 Toulouse Cedex(FR)**

(54) **Pédale de bicyclette permettant l'accrochage d'une chaussure en position préréglée et chaussure de cycliste adaptée à ladite pédale.**

(57) L'invention concerne une pédale de bicyclette du type comprenant des moyens d'accrochage 3, 4, 5 adaptés pour coopérer avec des moyens conjugués d'une chaussure. Cette pédale est équipée de moyens de réglage permettant une fixation de la chaussure dans la position la plus appropriée fonction de la conformation de l'utilisateur. A cet effet, le corps de pédale est supporté par l'axe de pédale par l'entremise de deux pièces intermédiaires montées mobiles, d'une part, l'une par rapport à l'autre, d'autre part respectivement par rapport à l'axe de pédale et par rapport au corps de pédale de façon à permettre un mouvement $(D_T)$ de translation transversale dudit corps, un mouvement $(D_L)$ de translation longitudinale, un mouvement $(R_V)$ de pivotement autour d'un axe orthogonal V et, le cas échéant, un mouvement $(R_L)$ de pivotement autour de l'axe longitudinal. Des moyens de blocage permettent de bloquer les deux pièces mobiles dans la position désirée.

Fig. 7

1

# PEDALE DE BICYCLETTE PERMETTANT L'ACCROCHAGE D'UNE CHAUSSURE EN POSITION PREREGLEE ET CHAUSSURE DE CYCLISTE ADAPTEE A LADITE PEDALE.

L'invention concerne une pédale de bicyclette ou d'engin analogue, du type comprenant des moyens d'accrochage aptes à coopérer avec des moyens conjugués disposés sous une chaussure, dans le but d'assurer une fixation de la chaussure sur la pédale en vue du pédalage, tout en autorisant un dégagement en cas de besoin ; elle s'étend à une chaussure adaptée pour permettre son accrochage sur ladite pédale.

On connaît des dispositifs de fixation d'une chaussure sur une pédale, qui permettent de supprimer les courroies traditionnelles difficiles à mettre en place et sources de danger en raison des difficultés de dégagement dont elles s'accompagnent. Les qualités demandées aux dispositifs de fixation de ce type sont essentiellement d'autoriser un accrochage facile et rapide, d'assurer une bonne solidarisation entre le pied et la pédale et de satisfaire aux conditions de sécurité nécessaires, en particulier en permettant, par une action de déclenchement des moyens d'accrochage, un dégagement volontaire de la chaussure en cas de besoin et un dégagement automatique sous l'effet d'un choc résultant d'une chute ou d'un accident. On a décrit un dispositif répondant à ces exigences dans la demande de brevet français n° 78.33775 déposée le 24 novembre 1978 au nom des demandeurs et publiée le 20 juin 1980 sous le numéro 2.442.175.

Dans les dispositifs de ce type, la chaussure est rigidement fixée sur la pédale dans une position unique sans faculté de mouvement relatif. Dans ces conditions, il est important que cette position corresponde, pour chaque utilisateur, à la position la plus appropriée lui permettant de développer des efforts de pédalage dans les meilleures conditions.

La présente invention se propose de fournir une pédale du type sus-évoqué, qui puisse être préalablement réglée par l'utilisateur pour l'adapter parfaitement à ses besoins et lui permettre d'obtenir une position relative pied/ pédale optimale.

Un autre objectif de l'invention est de permettre d'effectuer lesdits réglages de façon simple, commode et rapide.

Un autre objectif de l'invention est d'améliorer le confort des mouvements de pédalage en permettant un faible déplacement élastique du pied par rapport à la pédale sans risque de déclenchement pour des efforts de pédalage normaux.

Un autre objectif est de donner à l'utilisateur la possibilité de supprimer le cas échéant cette souplesse pour obtenir une fixation rigide entre le pied et la pédale, tout en gardant les sécurités de déclenchement du dispositif de base.

Un autre objectif de l'invention est de faciliter la mise en place et l'enclenchement de la chaussure sur la pédale.

Un autre objectif est de fournir une pédale bénéficiant d'un poids réduit, du même ordre que celui des pédales classiques.

Pour simplifier la description et faciliter la compréhension, sont définies ci-après plusieurs expressions utilisées par la suite :

. plan d'appui : plan parallèle à la face d'appui de la pédale contenant les moyens d'accrochage (après accrochage, la semelle de la chaussure vient se situer en position approximativement parallèle à ce plan d'appui),

. axe transversal (T) : axe coïncidant avec l'axe de pédale (cet axe s'étend d'un côté à l'autre de la pédale),

. axe longitudinal (L) : axe situé dans le plan d'appui et approximativement perpendiculaire à l'axe transversal (T), (cet axe s'étend de l'avant vers l'arrière de la pédale et passe approximativement par son centre),

. axe orthogonal (V) : axe approximativement perpendiculaire au plan d'appui et passant approximativement par le centre de la pédale.

(Il est à noter que, pour une position moyenne des réglages, l'axe transversal (T), l'axe longitudinal (L) et

l'axe orthogonal (V) sont généralement perpendiculaires deux-à-deux ; ceci n'est plus vrai pour d'autres positions de réglage où les orientations de l'axe longitudinal (L) et de l'axe orthogonal (V) ont pu être amenées à varier, d'une part, l'une par rapport à l'autre, d'autre part, par rapport à celle de l'axe transversal (T) pris comme référence).

La pédale de bicyclette ou d'engin analogue, visée par l'invention, comprend un ensemble, dit axe de pédale, généralement composé d'une entretoise tubulaire supportée à roulement par un axe transversal, et un corps de pédale formant un plan d'appui pourvu de moyens d'accrochage aptes à coopérer avec des moyens conjugués disposés sous une chaussure. Selon la présente invention, le corps de pédale est supporté par l'axe de pédale par l'entremise d'au moins deux pièces intermédiaires, l'une portée par ledit axe de pédale, l'autre portée par la première et portant elle-même le corps de pédale ; lesdites pièces sont montées mobiles, d'une part, l'une par rapport à l'autre, d'autre part, respectivement par rapport à l'axe de pédale et par rapport au corps de pédale, de façon à permettre un mouvement $(D_T)$ de translation transversale dudit corps le long de l'axe transversal (T) de pédale, un mouvement $(D_L)$ de translation longitudinale du corps le long de l'axe longitudinal (L) de pédale et un mouvement $(R_V)$ de pivotement dudit corps autour de l'axe orthogonal (V) (sensiblement orthogonal au plan d'appui) ; la pédale est en outre équipée de moyens de blocage permettant de bloquer dans une position choisie, d'une part, la première pièce mobile par rapport à l'axe de pédale, d'autre part la seconde pièce mobile par rapport à la première, enfin le corps de pédale par rapport à ladite seconde pièce mobile.

L'utilisateur peut ainsi ajuster la position de son pied sur la pédale en ajustant la position du corps de pédale et donc des moyens d'accrochage liés à celui-ci, par une combinaison des trois réglages indépendants prévus ; il libère d'abord les moyens de blocage et réalise ensuite, d'une part, le positionnement de la première pièce par rapport à l'entretoise tubulaire, d'autre part, le positionnement de la seconde pièce par rapport à la première, enfin le positionne- ment du corps de pédale par rapport à cette seconde pièce ; une fois ces réglages effectués, il bloque alors à nouveau les moyens de blocage, ce qui lui permet de disposer d'une pédale qui lui est parfaitement adaptée.

Selon une autre caractéristique de l'invention, les deux pièces mobiles précitées sont agencées de façon à permettre un quatrième mouvement ($R_L$), constitué par un mouvement de pivotement du corps de pédale autour de l'axe longitudinal (L). Ce réglage complémentaire permet, de façon précise, et quelle que soit la conformation de l'utilisateur, de conférer au pied la position idéale pour le pédalage et est souhaitable pour des pédales destinées à des professionnels ou à des amateurs éclairés.

Selon un mode de réalisation préféré, la pédale est agencée de la façon suivante :

. la première pièce mobile, dite noyau mobile, est montée coulissante transversalement le long de l'axe de pédale et est dotée de moyens de tourillonnement autour de l'axe orthogonal (V),

. la seconde pièce mobile, dite douille mobile, est montée pivotante autour des moyens de tourillonnement du noyau et est pourvue de moyens de guidage en translation longitudinale,

. le corps de pédale est monté coulissant longitudinalement le long des moyens de guidage de la douille mobile.

Dans le cas évoqué plus haut où la pédale possède un quatrième mouvement de réglage, les moyens de guidage de la douille seront constitués par des tourillons avant et arrière que porte celle-ci, le corps de pédale étant monté sur ses tourillons de façon à pouvoir coulisser longitudinalement le long de ces derniers et à pouvoir pivoter autour de ceux-ci.

La structure préférentielle ci-dessus décrite permet d'obtenir une pédale compacte et légère ; à cet égard, pour abaisser encore le poids de celle-ci, les deux pièces mobiles peuvent être réalisées en alliage léger, notamment en alliage de magnésium.

Par ailleurs, pour assurer, par des manoeuvres simples, un blocage ferme dans la position préréglée, la pédale est de préférence équipée de deux organes de blocage : un premier organe permettant, d'une part, de bloquer, dans une position transversale désirée, le noyau le long de l'axe de pédale, d'autre part, de bloquer la douille sur le noyau dans une position angulaire désirée autour de l'axe orthogonal (V), et un second organe de blocage, permettant de bloquer le corps de pédale sur les tourillons de la douille, d'une part, dans une position longitudinale désirée, d'autre part, dans une position angulaire désirée autour de l'axe longitudinal (L).

Par ailleurs, les moyens d'accrochage de la pédale sont, de préférence, du type comprenant deux griffes mobiles d'accrochage situées à l'arrière et au-dessus du corps de pédale, un mécanisme doté de moyens élastiques, adapté pour solliciter ces griffes vers une position d'accrochage et pour permettre leur escamotage latéral par une poussée transversale, et une griffe d'accrochage fixe, située à l'avant du corps de pédale pour former avec les deux griffes mobiles arrière un système d'accrochage triangulé.

Selon une autre caractéristique de l'invention, le mécanisme sus-évoqué sollicitant les griffes arrière comprend deux ressorts de dureté différente, agencés de sorte que le ressort le moins dur agisse d'abord sur les griffes et permette un pivotement de faible amplitude de celles-ci sous un effort transversal réduit, et que le ressort le plus dur agisse ensuite sur lesdites griffes pour permettre leur pivotement en vue du dégagement sous un effort transversal plus élevé.

Ainsi, le ressort le plus souple autorise un faible déplacement transversal du pied augmentant le confort du pédalage, sans nuire au maintien correct du pied puisque l'amplitude de ce déplacement est limitée par l'action du ressort le plus dur ; en cas de besoin, un effort transversal plus intensif, en particulier dirigé vers l'extérieur, engendre une compression du ressort le plus dur et un dégagement du pied.

En outre, le dispositif est de préférence équipé de moyens de manoeuvre permettant de neutraliser l'action du ressort le moins dur en vue d'obtenir le cas échéant une liaison rigide entre la chaussure et la pédale ; cette liaison rigide est souhaitable dans certains cas, notamment en course pour un sprint où le confort de pédalage doit être abandonné au profit de la rigidité et de la précision du maintien du pied sur la pédale.

Par ailleurs, l'invention s'étend à une chaussure de cycliste, appelée à coopérer avec une pédale à trois griffes du type ci-dessus décrit ; cette chaussure comprend, sous sa semelle, une joue avant d'accrochage et deux joues arrière d'accrochage, de profils adaptés aux griffes avant et arrière de la pédale et disposées aux trois sommets d'un triangle pour pouvoir coopérer avec lesdites griffes.

Selon une caractéristique de l'invention destinée à faciliter la mise en place et l'enclenchement de la chaussure sur la pédale, ladite chaussure comprend en outre, sous sa semelle, deux joues de guidage, divergeant de part et d'autre de la joue d'accrochage avant, en direction des joues d'accrochage arrière en vue de guider les deux griffes arrière de la pédale au cours de la mise en place, de façon que celles-ci arrivent en face des joues d'accrochage avec lesquelles elles sont appelées à coopérer.

L'invention ayant été exposée dans sa forme générale, d'autres caractéristiques, buts et avantages de celle-ci se dégageront de la description qui suit, en regard des dessins annexés, lesquels illustrent, à titre d'exemple non limitatif, un mode de réalisation de l'invention ; sur ces dessins, qui font partie intégrante de la présente description :

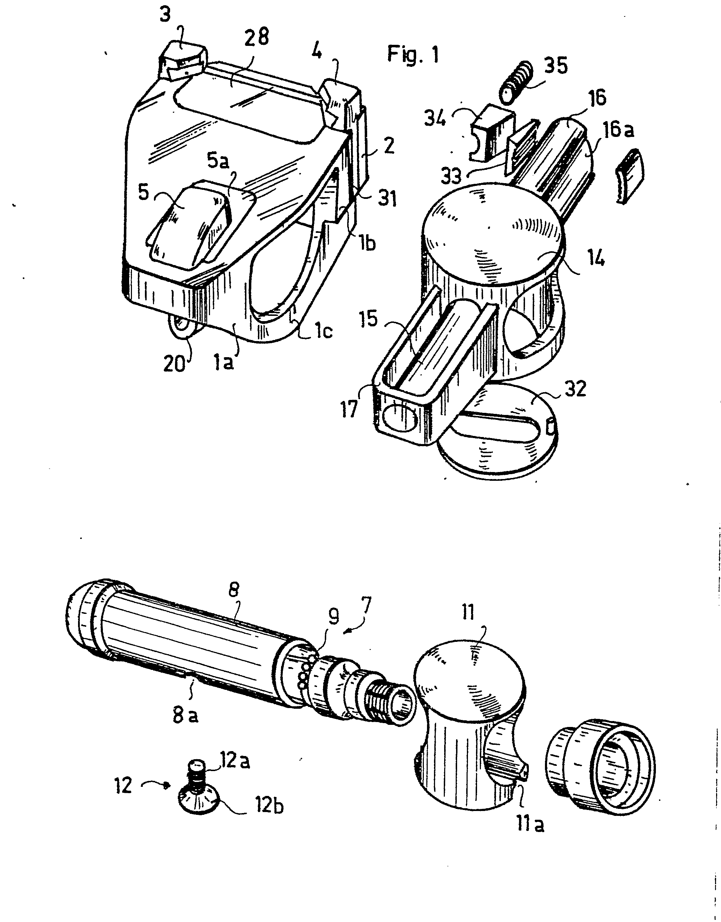

. la figure 1 est une vue schématique en perspective éclatée, montrant les principales pièces d'une pédale conforme à l'invention,

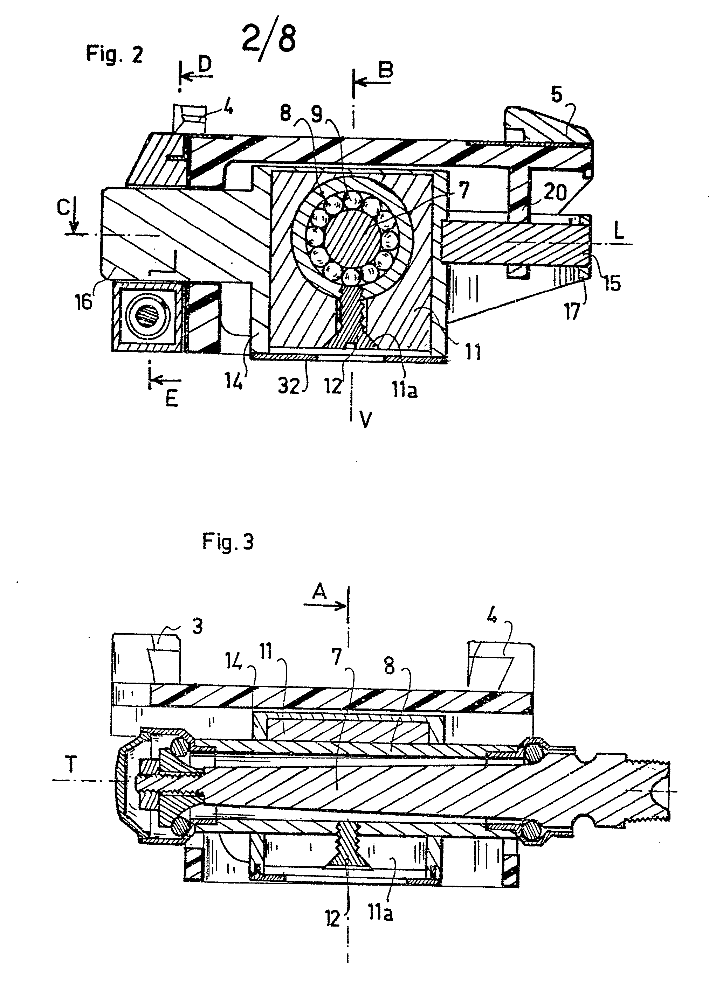

. la figure 2 est une coupe de ladite pédale à échelle dilatée, par un plan longitudinal A,

. la figure 3 en est une coupe à échelle dilatée, par un plan transversal B passant par l'axe de pédale,

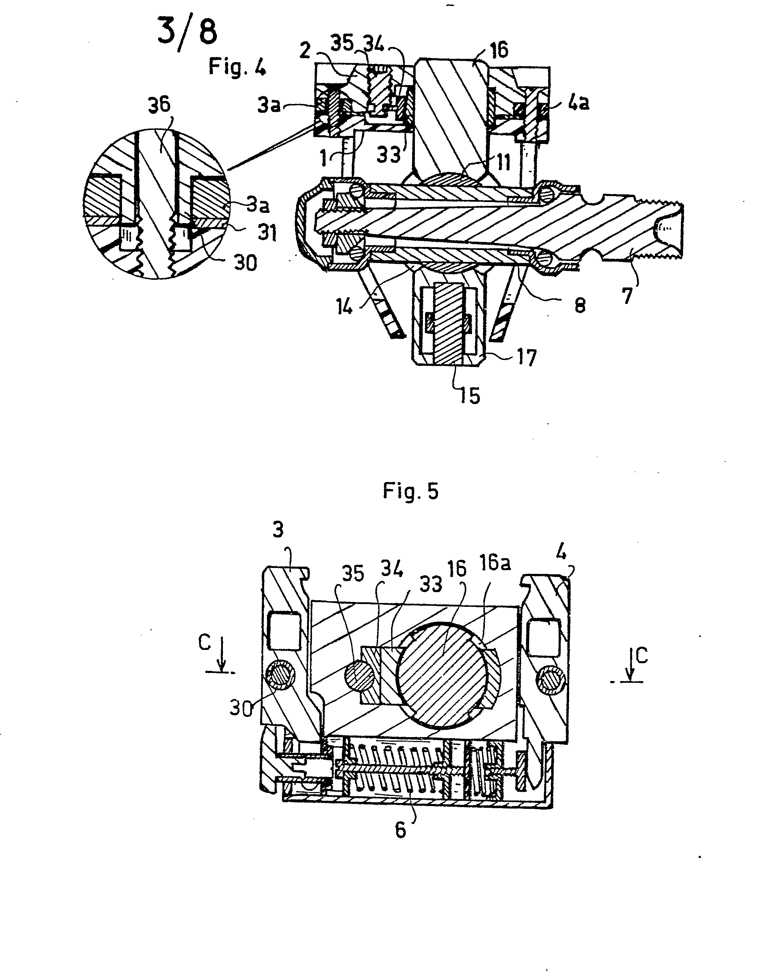

. la figure 4 en est une coupe par un plan C parallèle au plan d'appui et passant par l'axe de pédale,

. la figure 5 en est une coupe transversale le long d'une ligne brisée D, E,

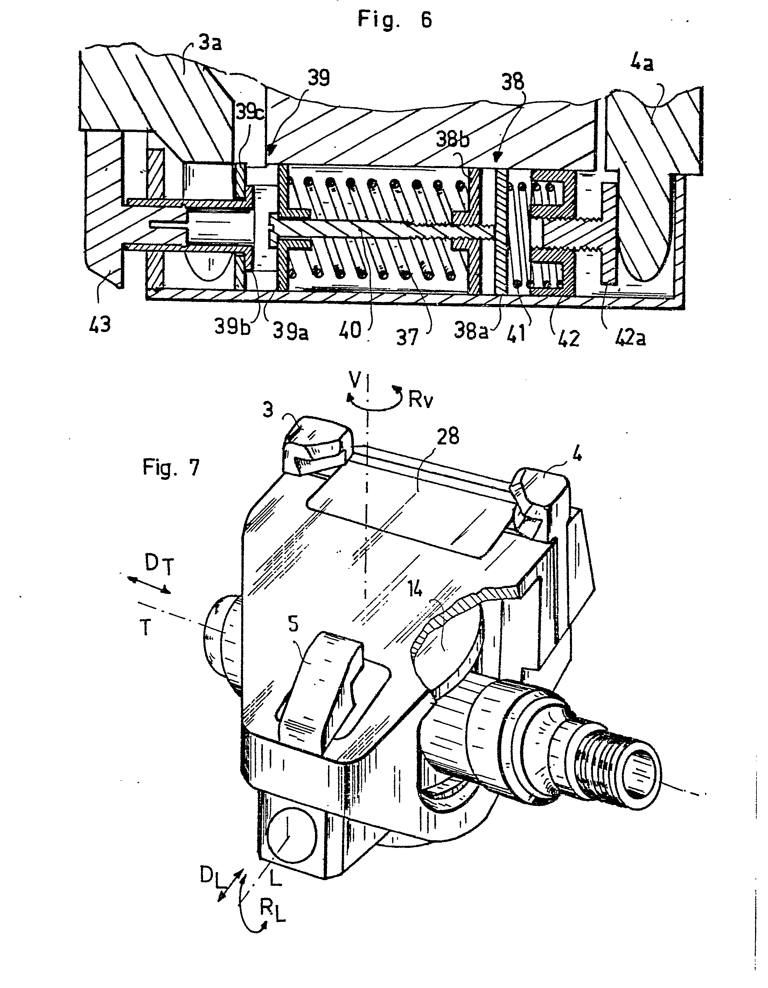

. la figure 6 est une vue, à échelle dilatée, d'une partie de la figure 5,

. la figure 7 _ est une vue schématique, en perspective, montrant les principales pièces de la pédale montées,

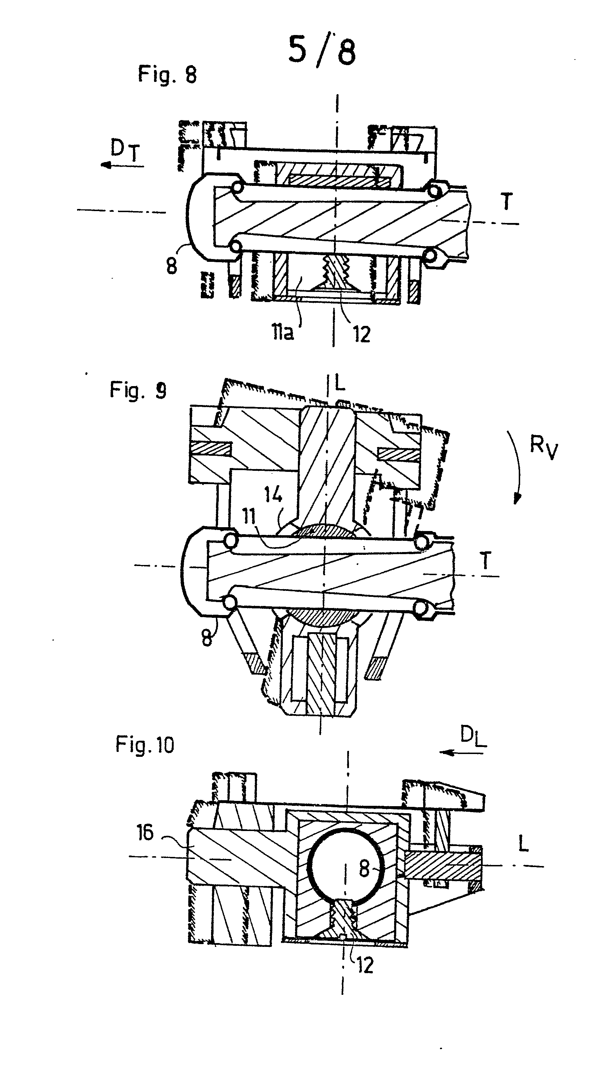

. la figure 8 est une coupe schématique par le plan transversal B, destinée à illustrer une première possibilité de réglage de la pédale,

. la figure 9 est une coupe schématique par le plan C, destinée à illustrer une autre possibilité de réglage de la pédale,

. la figure 10 est une coupe schématique par le plan longitudinal A, destinée à illustrer une autre possibilité de réglage,

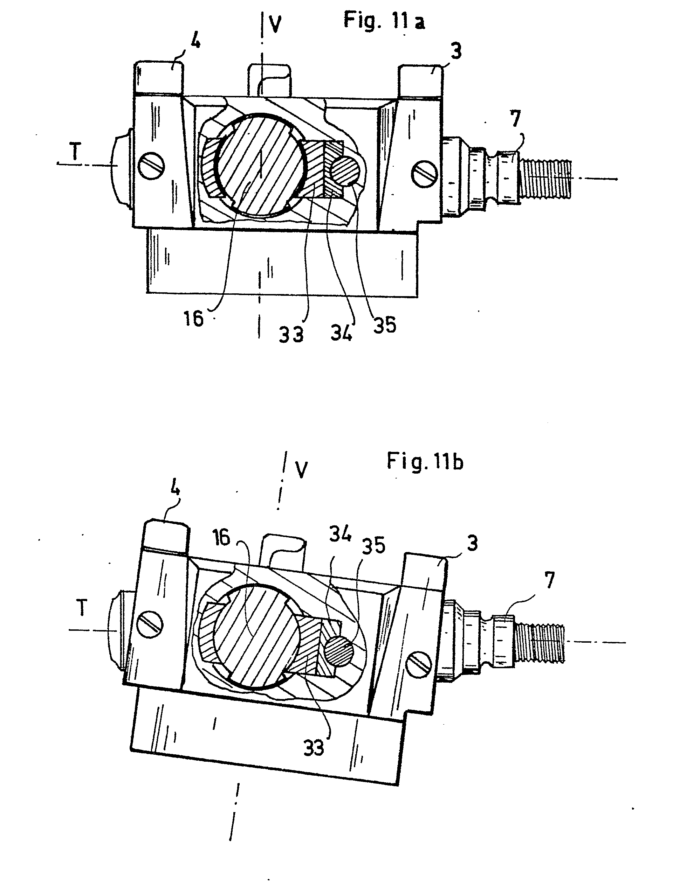

. les figures 11a et 11b sont des coupes partielles par un plan transversal D situé à l'arrière de la pédale, ces figures étant destinées à illustrer une autre possibilité de réglage de la pédale,

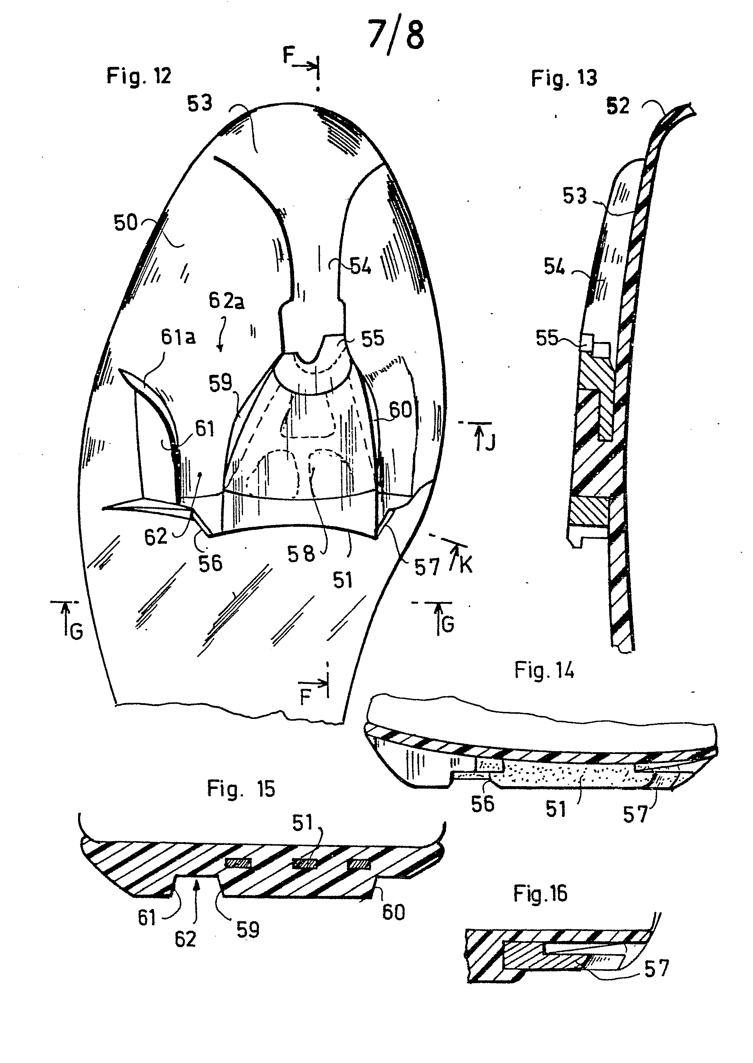

. la figure 12 est une vue partielle en plan d'une semelle de chaussure conforme à l'invention, appelée à coopérer avec une pédale telle que représentée aux figures précédentes,

. la figure 13 en est une coupe longitudinale partielle par un plan FF,

. les figures 14 et 15 en sont des coupes transversales respectivement par un plan GG et par un plan JJ (les parties métalliques apparentes de la figure 15 ont été munies de pointillés pour rendre cette figure plus claire),

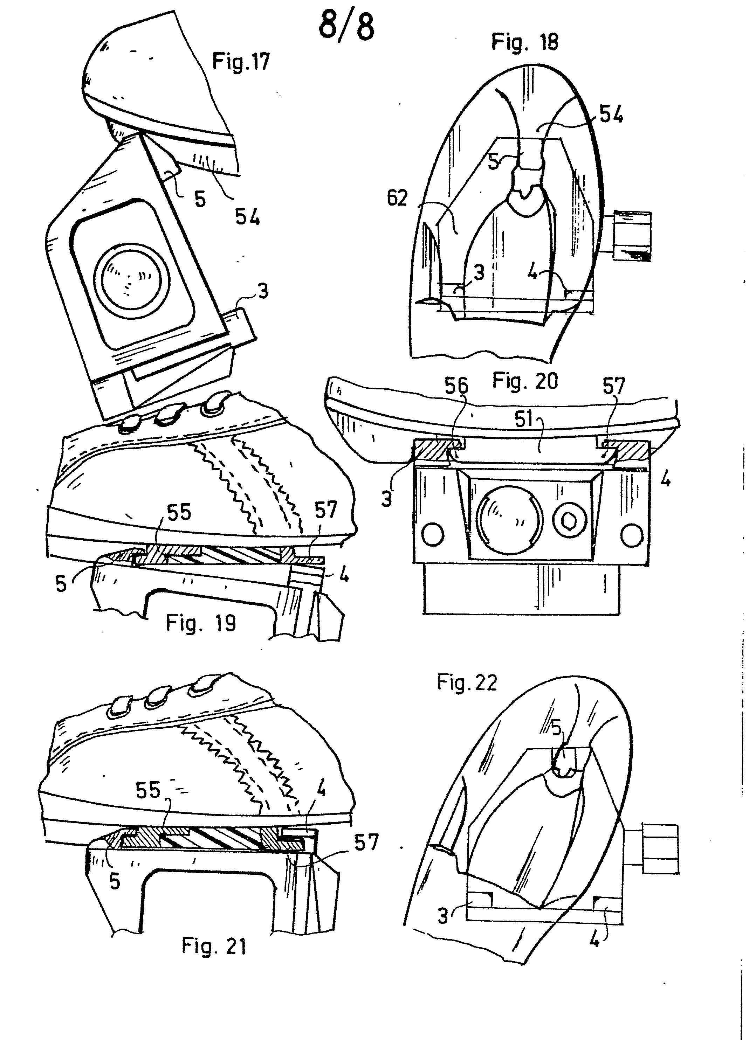

. la figure 16 est une coupe de détail par un plan K d'une joue d'accrochage (avec, dessinée en trait discontinu, une griffe arrière en position accrochée),

. les figures 17, 18, 19, 20, 21 et 22 illustrent schématiquement l'utilisation de la pédale et de la chaussure conformes à l'invention, (la chaussure étant supposée transparente pour les vues en plan 18 et 22).

La pédale représentée à titre d'exemple aux figures 1 à 11 comprend un corps de pédale réalisé en deux parties 1 et 2 par moulage en matière synthétique telle que polyamide, armée au moyen de fibres de verre ou de carbone ; la première partie 1 qui forme l'essentiel du corps comprend une portion avant 1a et une portion arrière 1b réunies par une plaque supérieure 1c et par des entretoises, telles que 1c, s'incurvant vers le bas pour passer en partie basse de la pédale ; la portion arrière 1b est constituée par un retour inférieur, s'étendant sur toute la largeur du corps.

A l'arrière de la partie 1 est fixée la deuxième partie du corps par deux vis 36 ; celle-ci est constituée par une platine 2 où est logé un mécanisme 6 qui sera décrit plus loin. Ce mécanisme sollicite élastiquement deux griffes arrière pivotantes 3 et 4 pour leur permettre un escamotage latéral sous l'effet d'une poussée transversale. A l'avant, le corps comporte une griffe avant 5 qui a été ensérrée par une embase 5a dans la partie 1 lors du moulage de celle-ci ; de plus, le corps comporte à sa partie inférieure une patte percée 20 en vue de son maintien.

La griffe avant 5 (en acier inoxydable) est constituée par un plot doté d'une échancrure d'accrochage s'ouvrant vers l'arrière et vers l'intérieur de la pédale. Les griffes arrière 3 et 4 (également en acier inoxydable) sont articulées par des barrettes 3a et 4a qui les prolongent vers le bas, autour d'axes longitudinaux 30 leur permettant un escamotage latéral ; les barrettes 3a et 4a sont logées entre la partie 1 et la platine arrière 2 du corps ; à leur extrémité supérieure faisant saillie au-dessus du corps, les griffes 3 et 4 sont dotées d'échancrures d'accrochage aux faces de contact obliques par rapport à la direction longitudinale.

Les trois griffes forment ainsi un système d'accrochage triangulé apte à maintenir parfaitement une chaussure dotée de moyens conjugués, tout en permettant son dégagement en cas de besoin.

Il est à noter que la platine arrière 2 est fixée à l'arrière du corps 1, en interposant au moins une fine câle arrière 31 de rattrapage d'usure ; chaque câle se présente sous la forme d'une plaquette amovible adaptée pour pouvoir être disposée et serrée entre la platine arrière 2 et la portion arrière 1b du corps ; cette ou ces câles autorisent un réglage de la position longitudinale des deux griffes arrière par rapport à la griffe avant et permettent ainsi de réajuster de façon précise la distance entre ces griffes après usure (en ôtant une ou plusieurs câles).

De plus, en l'exemple le corps de pédale est complété, en surface, par une plaque d'usure arrière 28, en acier inoxydable, qui peut être collée dans une échancrure arrière de celui-ci.

Par ailleurs, le corps de pédale (1, 2) est porté -par l'entremise de moyens de réglage ci-après décrits- par un axe de pédale 7 de type classique, définissant l'axe transversal T pris comme référence ; cet axe porte une entretoise tubulaire 8 qui est articulée sur celui-ci par deux roulements, tels que 9, situés d'un côté et de l'autre dudit axe ; l'entretoise tubulaire 8 est supportée par les cages externes de ces roulements de façon à pouvoir tourner autour de l'axe transversal T.

L'entretoise tubulaire 8 porte une première pièce mobile 11, dite noyau, qui est agencée de façon à pouvoir coulisser le long de cette entretoise (mouvement $D_T$). Ce noyau 11 présente la forme générale d'un bloc cylindrique ayant comme axe, l'axe orthogonal V, et percé d'une lumière cylindrique d'axe transversal T dans laquelle passe l'entretoise tubulaire 8 ; le noyau 11 est doté à sa base d'une fente transversale 11a dont les bords sont biaisés pour s'évaser vers le bas.

Le noyau 11 porte une seconde pièce mobile, dite douille 14, qui comprend un élément cylindrique creux adapté pour coiffer ledit noyau, avec des lumières oblongues de passage de l'entretoise tubulaire 8. La surface cylindrique externe du noyau sert ainsi de moyens de tourillonnement autour de l'axe orthogonal V, conférant à la douille 14 la faculté de pivoter autour de cet axe (mouvement $R_V$).

La douille 14 comprend en outre des tourillons avant 15 et arrière 16 qui sont portés par son élément cylindrique et s'étendent le long de l'axe longitudinal L.

Le tourillon avant 15 est en l'exemple constitué par un axe rapporté, fixé notamment par collage sur l'élément cylindrique 14 de la douille et sur une extension 17 prévue à l'avant de cette douille. Ce tourillon 15 est engagé dans le perçage de la patte inférieure 20 du corps afin de supporter celui-ci et le guider en translation longitudinale et en rotation autour de l'axe longitudinal L.

Le tourillon arrière 16 sert à supporter la portion arrière lb du corps et à guider ce dernier le long et autour de l'axe longitudinal L. A cet effet, cette portion arrière lb est percée d'une lumière qui est traversée par ledit tourillon arrière 16. Ce dernier est en outre doté de deux secteurs cylindriques latéraux, tels que 16a, qui sont disposés légèrement en retrait et permettront, comme on le verra plus loin, de bloquer le corps par rapport audit tourillon 16.

Par ailleurs, la pédale comprend un premier organe de blocage pour bloquer, d'une part, le noyau 11 sur l'entretoise tubulaire 8, d'autre part, la douille 14 sur ledit noyau 11.

Cet organe comprend une vis 12 dotée d'une tige 12a vissée dans l'entretoise tubulaire 8 qui est dotée à cet effet d'un trou fileté 8a, et d'une tête conique 12b logée dans la fente transversale 11a du noyau. La tête de vis 12b permet ainsi d'écarter les deux parties du noyau (disposées de part et d'autre de la fente 11a) et d'engendrer une expansion radiale de celui-ci assurant son blocage à l'intérieur de la douille 14 dans une position angulaire désirée autour de l'axe orthogonal (V). De plus, la vis 12 assure une fixation du noyau 11 sur l'entretoise 8 dans la position transversale désirée le long de l'axe T.

Le noyau 11 et la douille 14 sont avantageusement réalisés en alliage de magnésium afin de bénéficier d'une grande légèreté. Dans ce cas, un insert en acier est de préférence vissé dans l'entretoise 8 pour y ménager un trou taraudé 8a, peu sujet à l'usure. De plus, la douille 14 peut être fermée à sa base par un couvercle 32, encliqueté sous celle-ci et doté d'une lumière permettant d'accéder à la vis 12.

La pédale comporte en outre un second organe de blocage pour bloquer le corps de pédale 1, par rapport au tourillon arrière 16 de la douille 16.

Cet organe comprend deux câles de blocage telles que 33, un coin de serrage 34 en appui par une surface biaise contre une des câles et une vis de manoeuvre 35 de ce coin de serrage.

Les câles 33 possèdent des surfaces circulaires striées qui s'appliquent de part et d'autre du tourillon arrière 16 dans les secteurs circulaires en retrait 16a ; la vis 35 manoeuvrée dans un sens ou dans l'autre engendre un effet de serrage ou de libération du tourillon 16 entre les deux câles : il est ainsi possible de libérer le corps de pédale pour lui conférer une position désirée le long et autour de l'axe longitudinal L et de bloquer ensuite ce dernier dans cette position.

Par ailleurs, le mécanisme 6 sollicitant élastiquement les barrettes 3a et 4a qui prolongent les griffes arrière 3 et 4 est représenté aux figures 5 et 6 ; ces barrettes sont articulées sur les axes longitudinaux 30 déjà évoqués, qui sont constitués, en l'exemple, par des prolongements creux cylindriques de la platine arrière 2; ces prolongements 30 contiennent des vis 36 servant à fixer ladite platine arrière 2 sur l'autre partie 1 du corps de pédale.

En partie basse, la platine 2 délimite un logement dans lequel est logé le mécanisme 6 qui est agencé pour solliciter les /barrettes 3a et 4a dans le sens de leur écartement (et donc les griffes 3 et 4 dans le sens de leur rapprochement).

Ce mécanisme 6 comprend un premier ensemble élastique composé d'un ressort 37 relativement dur, disposé entre deux organes d'appui mobiles 38 et 39, lesquels sont entretoisés par une vis 40. Cet ensemble repousse par l'entremise d'un de ses organes d'appui 39 une des barrettes (3a).

Le mécanisme 6 comprend un second ensemble élastique disposé du côté de la barrette 4a prolongeant l'autre griffe ; celui-ci se compose d'un ressort 41 moins dur que le précédent, disposé entre l'organe d'appui 38 et une coupelle 42 s'appuyant contre la barrette 4a. En l'exemple, cette coupelle 42 s'appuie contre cette barrette par l'entremise d'une vis 42a de réglage de jeu.

La coupelle 42 est adaptée pour pouvoir venir au contact de l'organe d'appui 38 lorsque le ressort 41 a subi une compression déterminée et s'est rétracté d'une amplitude donnée.

Ainsi, le ressort le moins dur 41 est le premier à être comprimé sous l'action d'un faible effort transversal sur les griffes arrière 3 et 4; il autorise un mouvement de pivotement élastique de ces griffes, la faible amplitude de ce mouvement étant prévue pour éviter un déclenchement des griffes 3 et 4 (c'est-à-dire un dégagement de celles-ci par rapport aux joues arrière d'accrochage de la chaussure).

Lorsque la coupelle 42 vient au contact de l'organe d'appui 38, l'action du ressort 41 est neutralisée et c'est le ressort le plus dur 37 qui s'oppose à la rotation des griffes arrière. Celle-ci ne s'effectuera que sous l'effet d'un effort transversal plus important entraînant le déclenchement du dispositif et la libération du pied du cycliste.

En l'exemple, l'organe d'appui 38 comprend une plaquette 38a disposée en bout de la vis 40 pour servir d'appui au ressort 41, et un écrou 38b vissé sur ladite vis 40 et contre laquelle le ressort 37 vient s'appuyer. Cette disposition permet d'effectuer un tarage préalable de la force exercée par le ressort 37 (correspondant à l'effort nécessaire au déclenchement).

De plus, l'organe d'appui 39 comprend une première plaquette 39a qui sert d'appui au ressort 37 par une de ses faces et comporte sur l'autre face une came qui vient coopérer avec une contre-came 39b ; cette dernière peut être amenée à pivoter par un bouton de manoeuvre 43.

En l'exemple, l'organe d'appui 39 vient s'appliquer contre la barrette 3a de la griffe par une plaquette 39c qui supprime les risques de rotation de la contre-came lorsque la barrette 3a pivote sous l'effet d'un effort de déclenchement exercé sur la griffe 3.

Le bouton 43, la came 39a et la contre-came 39b permettent de déplacer le premier ensemble élastique (organe d'appui 39, ressort 37, vis 40 et organe d'appui 38) afin de caler le cas échéant celui-ci dans la position où la coupelle 42 se trouve en contact permanent à la fois avec la barrette 4a et avec l'organe d'appui 38. Le ressort le moins dur 41 est alors neutralisé, ce qui permet de supprimer, à la demande, le faible jeu élastique fourni par celui-ci.

Les figures 8, 9, 10, 11a et 11b sont des vues schématiques explicatives des réglages de la pédale.

La figure 8 illustre le réglage le long de l'axe transversal T (mouvement $D_T$) avec une position schématisée en trait plein et une autre position schématisée en traits discontinus. Ce réglage est réalisé en desserrant la vis 12, en amenant le corps (1, 2) à glisser le long de l'entretoise tubulaire 8 jusqu'à la position désirée et en resserrant la vis 12.

La figure 9 illustre le réglage autour de l'axe orthogonal V (mouvement $R_V$). Ce réglage est réalisé en desserrant la même vis 12, en amenant la douille 14 à tourner autour du noyau 11 jusqu'à la position angulaire désirée et en resserrant ladite vis.

La figure 10 illustre le réglage le long de l'axe longitudinal L (mouvement $D_L$). Ce réglage est réalisé en desserrant la vis 35 en amenant le corps de pédale 1 à glisser le long des tourillons 15 et 16, et en resserrant la vis 35 lorsque la position correcte a été trouvée.

Les figures 11a et 11b illustrent le réglage autour de l'axe longitudinal L (mouvement $R_L$) et présentent respectivement deux positions différentes de réglage. Ce réglage est réalisé en desserrant la même vis 35, en amenant le corps de pédale à pivoter autour des tourillons 15 et 16, et en resserrant cette vis 35.

Par ailleurs, les figures 12, 13, 14, 15 et 16 représentent partiellement, à titre d'exemple, une chaussure destinée à coopérer avec la pédale ci-dessus décrite ; cette chaussure comprend une semelle 50 moulée en un matériau du type "RILSAN", dans un moule lui conférant les diverses formes décrites ci-après, avec un insert métallique 51 partiellement noyé dans celle-ci.

La semelle 50 est moulée de façon à présenter à sa partie avant 52 une section longitudinale arrondie s'étendant sans discontinuité jusqu'à une entrée convergente 53 d'une glissière longitudinale avant 54. La glissière 54 et l'entrée 53 sont formées par des surépaisseurs de matière, prévues de part et d'autre de celles-ci.

L'insert métallique 51 noyé dans la semelle présente une découpe appropriée pour former, d'une part, une joue avant d'accrochage 55 située en position apparente à l'extrémité de la glissière 54, d'autre part, deux joues arrière d'accrochage 56 et 57 situées de part et d'autre de la partie arrière apparente de l'insert.

La joue avant 55 présente en l'exemple la forme d'un C s'ouvrant vers l'avant avec une lèvre en surplomb qui s'avance vers l'avant en vue de l'accrochage de la griffe avant de pédale. A l'avant de ladite joue 55, la semelle forme des évidements de dégagement en bordure de la glissière 54.

Les joues arrière d'accrochage 56 et 57 présentent une direction oblique par rapport à l'axe longitudinal de la chaussure comme le montre la figure 12 ; chaque joue comprend une lèvre en surplomb à flanc incliné qui s'étend vers l'arrière en vue de l'accrochage d'une des griffes arrière de la pédale.

Par ailleurs, la partie centrale 58 de la semelle dans laquelle est noyée la portion centrale évidée de l'insert 51, est moulée en surépaisseur de façon à former deux joues de guidage 59 et 60, qui divergent de part et d'autre de la joue d'accrochage avant 55 en direction des joues d'accrochage arrière 56 et 57.

De plus, du côté externe de la chaussure, la semelle forme une joue supplémentaire de guidage 12 en regard de la joue 61 ; cette joue 61 présente une partie avant 61a incurvée vers le bord externe de la chaussure de façon à constituer, avec la joue 59, une glissière 62 à entrée convergente 62a, destinée à guider la griffe externe arrière de la pédale.

La combinaison du guidage de la griffe avant par la glissière avant 54, de la griffe arrière externe par la glissière arrière 62 et de la griffe arrière interne par la joue 60 conditionne une mise en place facile et rapide de la chaussure sur la pédale jusqu'en position de préaccrochage.

La coopération d'une chaussure et d'une pédale conforme à l'invention est illustrée aux figures 17 à 22.

Au début de la mise en place, le cycliste prend appui sur la pédale avec la partie avant arrondie de la chaussure et amène cette dernière à glisser vers l'avant par rapport à la pédale. La griffe avant 5 de la pédale s'engage dans l'entrée convergente 53 de la chaussure et est ensuite guidée par la glissière avant 54, cependant que la griffe arrière externe 3 s'engage dans l'entrée convergente 62a pour être ensuite guidée par la glissière 62 et que la griffe arrière interne 4 est guidée par la joue de guidage 60 (figures 17 et 18).

En fin de glissement (figure 16), la griffe avant 5 s'accroche sur la joue d'accrochage 55 et les joues d'accrochage arrière 56 et 57 viennent se situer au-dessus des griffes 4 et 5 correspondantes.

Une pression vers le bas suffit alors pour amener ces joues et griffes arrière à coopérer (figures 20 et 21) par le jeu du mécanisme élastique 6 de la pédale..

Le dégagement s'effectue par une rotation du pied vers l'extérieur comme le montre la figure 22.

Bien entendu, l'invention n'est pas limitée aux termes de la description précédente, mais s'étend à toutes les variantes possibles. Par exemple, l'entretoise tubulaire 8 de la pédale peut être remplacée par toute structure équivalente ; le cas échéant, celle-ci et l'axe de pédale 7 pourraient être constitués par un axe unique, le mouvement de rotation traditionnel de la pédale autour de l'axe T étant conféré par le noyau 11, monté tournant autour de cet axe, soit à roulement, soit de toute autre façon appropriée. On a assimilé dans les revendications qui suivent, l'entretoise tubulaire 8 et l'axe de pédale 7, en désignant cet ensemble par "axe de pédale (7, 8)", cette désignation s'étendant à tout ensemble équivalent.

REVENDICATIONS.

1/ - Pédale de bicyclette ou d'engin analogue, comprenant un axe de pédale (7, 8) et un corps de pédale (1, 2) formant un plan d'appui pourvu de moyens d'accrochage (3, 4, 5) aptes à coopérer avec des moyens conjugués disposés sous une chaussure, ladite pédale étant caractérisée en ce que le corps de pédale (1, 2) est supporté par l'axe de pédale (7, 8) par l'entremise d'au moins deux pièces intermédiaires, l'une (11) portée par ledit axe de pédale, l'autre (14) portée par la première et portant elle-même le corps de pédale, lesdites pièces (11, 14) étant montées mobiles, d'une part, l'une par rapport à l'autre, d'autre part, respectivement par rapport à l'axe de pédale et par rapport au corps de pédale, de façon à permettre un mouvement ($D_T$) de translation transversale dudit corps le long de l'axe transversal (T) de pédale, un mouvement ($D_L$) de translation longitudinale du corps le long de l'axe longitudinal (L) de pédale et un mouvement ($R_V$) de pivotement dudit corps autour d'un axe (V) dit orthogonal, sensiblement orthogonal au plan d'appui, ladite pédale comprenant des moyens de blocage (12, 33, 34, 35) permettant de bloquer dans une position choisie, d'une part, la première pièce mobile (11) par rapport à l'axe de pédale, d'autre part, la seconde pièce mobile (14) par rapport à la première, enfin le corps de pédale (12) par rapport à ladite seconde pièce mobile (14).

2/ - Pédale selon la revendication 1, caractérisée en ce que les deux pièces (11, 14) sont montées mobiles l'une par rapport à l'autre et par rapport à l'axe de pédale (7, 8) ou au corps de pédale (1, 2), de façon à permettre un quatrième mouvement ($R_L$) constitué par un mouvement de pivotement du corps de pédale autour de l'axe longitudinal (L).

3/ - Pédale selon l'une des revendications 1 ou 2, caractérisée en ce que :

. la première pièce mobile, dit noyau mobile (11), est montée coulissante transversalement le long de l'axe de pédale (7, 8) et est dotée de moyens de tourillonnement autour de l'axe orthogonal (V),

. la seconde pièce mobile, dite douille mobile (14), est montée pivotante autour des moyens de tourillonnement du noyau (11) et est pourvue de moyens de guidage en translation longitudinale (15, 16),

. le corps de pédale (1, 2) est monté coulissant longitudinalement le long des moyens de guidage de la douille mobile (14).

4/ - Pédale selon les revendications 2 et 3 prises ensemble, caractérisée en ce que les moyens de guidage de la douille mobile comprennent des tourillons avant (15) et arrière (16) que porte celle-ci, le corps de pédale (1, 2) étant monté sur ces tourillons de façon à pouvoir coulisser longitudinalement le long de ces derniers et à pouvoir pivoter autour de ceux-ci.

5/ - Pédale selon la revendication 4, caractérisée en ce qu'elle comprend deux organes de blocage, un premier organe (12) permettant, d'une part, de bloquer dans une position transversale désirée le noyau (11) le long d'une entretoise tubulaire (8) que comprend l'axe de pédale, d'autre part, de bloquer la douille (14) sur le noyau (11) dans une position angulaire désirée autour de l'axe orthogonal (V), et un second organe (33, 34, 35) permettant de bloquer le corps de pédale (1, 2) sur les tourillons (15, 16) de la douille, d'une part, dans une position longitudinale désirée, d'autre part, dans une position angulaire désirée autour de l'axe longitudinal (L).

6/ - Pédale selon la revendication 5, caractérisée en ce que le premier organe de blocage comprend une vis (12), dotée d'une tige (12a) vissée dans l'entretoise tubulaire (8) et d'une tête conique (12b) logée dans une fente transversale à bords biaisés (11a) du noyau, de façon à assurer, d'une part, un serrage du noyau (11) contre l'entretoise (8) dans la position transversale désirée, d'autre part, une expansion radiale dudit noyau (11) engendrant un blocage de celui-ci dans la douille (14) dans la position angulaire désirée autour de l'axe orthogonal (V).

7/ - Pédale selon l'une des revendications 5 ou 6, caractérisée en ce que le second organe de blocage comprend :

. deux câles de blocage (33) logées dans le corps (1, 2) et agencée pour pouvoir s'appliquer de part et d'autre contre l'un des tourillons (16) de la douille (14) afin de permettre de bloquer cette dernière et le corps dans des positions relatives désirées,

. un coin de serrage mobile (3, 4) agencé au contact de l'une des câles (33) pour permettre d'exercer une pression sur celle-ci en direction du tourillon (16),

. une vis de manoeuvre (35) du coin de serrage.

8/ - Pédale selon l'une des revendications 4, 5, 6 ou 7, caractérisée en ce que le noyau (11) présente la forme générale d'un bloc cylindrique, ayant comme axe l'axe orthogonal (V), ce bloc étant fendu à sa base et percé d'une lumière cylindrique d'axe transversal dans laquelle passe l'axe de pédale (7, 8), la douille (14) comprenant un élément cylindrique creux, adapté pour coiffer ledit noyau, avec des lumières oblongues de passage de l'axe de pédale, cet élément cylindrique étant pourvu à sa partie avant et à sa partie arrière des tourillons (15, 16) précités.

9/ - Pédale selon l'une des revendications 1, 2, 3, 4, 5, 6, 7 ou 8, dans laquelle les moyens d'accrochage comprennent deux griffes mobiles d'accrochage (3, 4) situées à l'arrière et au-dessus du corps de pédale (1, 2), un mécanisme (6) doté de moyens élastiques, adapté pour solliciter ces griffes (3, 4) vers une position d'accrochage et pour permettre leur escamotage latéral par une poussée transversale, et une griffe d'accrochage (5) située à l'avant du corps de pédale pour former avec les deux griffes mobiles arrière un système d'accrochage triangulé.

10/ - Pédale selon la revendication 9, dans laquelle les griffes arrière (3, 4) sont dotées de barrettes (3a, 4a) les prolongeant vers le bas, qui sont articulées par des axes longitudinaux (30) à l'arrière du corps de pédale (1, 2), le mécanisme étant agencé pour agir sur lesdites barrettes (3a, 4a) dans le sens de leur écartement, ladite pédale étant caractérisée en ce que le corps de pédale comprend, à sa partie arrière, une platine arrière (2), fixée sur l'autre partie (1) et de forme adaptée pour délimiter un logement pour le mécanisme (6).

11/ - Pédale selon la revendication 10, caractérisée en ce qu'il comprend au moins une câle arrière de rattrapage d'usure (31) disposée à l'avant des barrettes (3a, 4a), chaque câle (31) se présentant sous la forme d'une plaquette amovible adaptée pour pouvoir être disposée et serrée entre la platine arrière (2) du corps et l'autre partie (1) de celui-ci, en vue d'autoriser un réglage de la position longitudinale des deux griffes arrière par rapport à la griffe avant.

12/ - Pédale selon l'une des revendications 9, 10 ou 11, caractérisée en ce que le mécanisme (6) sollicitant les griffes arrière (3, 4) comprend deux ressorts de dureté différente (37, 41), agencés de sorte que le ressort le moins dur (41) agisse d'abord sur les griffes (3, 4) et permette un pivotement de faible amplitude de celles-ci sous un effort transversal réduit, et que le ressort le plus dur (37) agisse ensuite sur lesdites griffes pour permettre leur pivotement en vue du dégagement sous un effort transversal plus élevé.

13/ - Pédale selon la revendication 12, dans laquelle les griffes arrière (3, 4) sont dotées de barrettes (3a, 4a) les prolongeant vers le bas, caractérisée en ce que le mécanisme (6) sollicitant lesdites griffes arrière comprend :
. un premier ensemble élastique composé du ressort le plus dur (37) disposé entre deux organes d'appui mobiles (38, 39) entretoisés par une vis (40), cet ensemble étant agencé pour repousser par l'entremise d'un de ses organes d'appui (39), la première barrette (3a) prolongeant la première griffe (3),
. un second ensemble élastique composé du ressort le moins dur (41) disposé entre le second organe d'appui (38) du premier ensemble et une coupelle (42) agencée pour faire pression sur la seconde barrette (4a) qui prolonge la seconde griffe (4), ladite coupelle (42) étant adaptée pour venir également au contact du second organe d'appui (38) à partir d'une amplitude de compression déterminée du ressort le moins dur (41).

14/ - Pédale selon la revendication 13, caractérisée en ce qu'elle comprend un bouton de manoeuvre (43) adapté pour permettre, à la commande, de déplacer le premier ensemble élastique (37, 38, 39, 40) vers une position où la coupelle (42) du second ensemble vient en contact permanent avec le second organe d'appui (38) en vue de neutraliser l'action du ressort le moins dur (41).

15/ - Chaussure de cycliste appelée à coopérer avec une pédale conforme à l'une des revendications 9, 10, 11, 12, 13 ou 14, comprenant, sous sa semelle, une joue avant d'accrochage (55) et deux joues arrière d'accrochage (56, 57), de profils adaptés aux griffes avant (5) et arrière (3, 4) de la pédale et disposées aux trois sommets d'un triangle pour pouvoir coopérer avec lesdites griffes, ladite chaussure étant caractérisée en ce qu'elle comprend, sous sa semelle, deux joues de guidage (59, 60) divergeant de part et d'autre de la joue d'accrochage avant (55) en direction des joues d'accrochage arrière (56, 57) en vue de guider les deux griffes arrière (3, 4) de la pédale lors de la mise en place.

16/ - Chaussure de cycliste selon la revendication 15, caractérisée en ce que, du côté externe de la chaussure, une joue supplémentaire de guidage (61) est prévue en regard de la joue de guidage correspondante (59), avec une partie avant orientée vers le bord externe de la chaussure, en vue de former une glissière (62) à entrée convergente (62a) pour la griffe externe arrière (3) de la pédale.

17/ - Chaussure de cycliste selon l'une des revendications 15 ou 16, comprenant une glissière longitudinale (54) disposée à l'avant et dans l'axe de la joue avant (55) pour guider la griffe avant de la pédale (5) au cours de la mise en place, et une entrée convergente (53) disposée à l'avant de ladite glissière, ladite chaussure étant caractérisée en ce que sa partie avant (52) présente une section longitudinale arrondie, s'étendant sans discontinuité jusqu'à l'entrée convergente (53) de la glissière longitudinale avant (54).

Fig. 1

Fig. 2

Fig. 3

**Fig. 2**

**Fig. 3**

3/8

Fig. 4

Fig. 5

Fig. 7

Fig. 8

$D_T$

T

8

11a  12

Fig. 9

L

$R_V$

14

11

T

8

Fig. 10

$D_L$

16

L

8

12

0058438

Fig. 11 a

Fig. 11b

Fig. 12

Fig. 13

53

F→

50

54

62a

61a

55

59

60

61

J

62

56   58   57 K

51

G

F→

G

52

53

54

55

Fig. 14

56   51   57

Fig. 15

51

61   59   60

62

Fig.16

57

8/8

0058438

Fig. 17

Fig. 18

Fig. 19

Fig. 20

Fig. 21

Fig. 22